# EUROPEAN PATENT SPECIFICATION

(11) **EP 1 815 684 B1**
(45) Date of publication and mention of the grant of the patent: **31.12.2014**
(21) Application number: 05825073.9
(22) Date of filing: 21.11.2005
(51) Int. Cl.: H04N 21/231, H04N 21/2343, H04N 5/44, H04N 5/45, H04N 7/173, H04N 21/434, H04N 21/2365, H04N 21/438, H04N 21/462, H04N 21/472, H04N 21/6405

(54) **METHOD AND APPARATUS FOR CHANNEL CHANGE IN DSL SYSTEM**
VERFAHREN UND VORRICHTUNG ZUM KANALWECHSELN IN DSL SYSTEM
PROCEDE ET APPAREIL POUR MODIFIER DES VOIES DANS UN SYSTEME DE LIGNES D'ABONNES NUMERIQUES

(30) Priority: 22.11.2004 US 630147 P
(43) Date of publication of application: 08.08.2007
(73) Proprietor: Thomson Research Funding Corporation, Indianapolis, IN 46290 (US)
(72) Inventor: BOYCE, Jill, Macdonald, Manalapan, New Jersey 07726 (US)
(74) Representative: Huchet, Anne
(86) International application number: PCT/US2005/042057
(87) International publication number: WO 2006/057938

(56) References cited:
- EP-A- 1 294 193
- EP-A- 1 383 334
- US-A- 6 118 498
- US-A1- 2004 003 399

## Description

### GOVERNMENT LICENSE RIGHTS IN FEDERALLY SPONSORED RESEARCH AND

### DEVELOPMENT

The U.S. Government has a paid-up license in this invention and the right in limited circumstances to require the patent owner to license others on reasonable terms as provided for by the terms of project ID contract No. 2003005676B awarded by the National Institute of Standards and Technology.

### CROSS-REFERENCE TO RELATED APPLICATIONS

This application claims the benefit of U.S. Provisional Application Serial No. 60/630,147, filed on November 22, 2004 and entitled "METHOD AND APPARATUS FOR CHANNEL CHANGE IN DSL SYSTEM,".

### FIELD OF THE INVENTION

The present invention generally relates to Digital Subscriber Line (DSL) systems and, more particularly, to a method and apparatus for enabling a channel change in a DSL system.

### BACKGROUND OF THE INVENTION

In a Digital Subscriber Line (DSL) multicast/broadcast video system, Internet Protocol (IP) multicast is used to transmit compressed video to a set-top box (STB). The Internet Group Management Protocol (IGMP) can be used to select which channel to watch, by sending a join request for the desired channel to a Digital Subscriber Line Access Multiplexer (DSLAM). When that channel is no longer desired, a leave request can be sent to the DSLAM.

In a commercial video over DSL broadcast system, it is desirable to allow end users to be able to change channels rapidly. Popular video compression standards, such as MPEG-2 and JVT/H.264/MPEG AVC use intra and inter coding. For proper decoding, a decoder must decode a compressed video sequence beginning with an intra-coded (I) picture, and then continuing to decode the subsequent inter-coded (P and B) pictures. A Group of Pictures (GOP) may include at least one I picture and at least one P and/or B picture. I pictures typically require many more bits to code than a P or B picture of equivalent video quality, often in the range of 3-10 times as many bits.

When a receiver initially begins receiving a program on a particular channel, following a channel change or upon the initial turning on of the receiver, the receiver must wait until an I picture is received to begin decoding properly, which causes a delay.

To minimize channel change delay in digital video broadcast systems, I pictures are typically sent frequently, e.g., every N pictures. For example, to enable a ½ second delay (of the video compression portion of the system), it is common to use N=15 for 30 fps content. Since compressed I pictures are much larger than compressed P and B pictures, this considerably increases the bitrate over what would be required if I pictures were not inserted so frequently.

In some systems, instead of sending full I pictures frequently, a technique called "progressive refresh" is used, where sections of pictures are intra coded. Typically, all macroblocks in the picture are intra-coded at least once during an N-picture period.

In the JVT/H.264/MPEG AVC compression standard, P and B pictures may be predicted using multiple reference pictures, including the pictures before a preceding I picture. The standard identifies random access points as Independent Decoder Refreshes (IDRs), which are constrained in that no reference pictures before the IDR are used in predicting pictures following the IDR. Pictures may be coded using slices of different types. A picture in which all coded slices are of type I may be referred to as an I picture.

The JVT/H.264/MPEG AVC compression standard includes a tool called redundant pictures, defined in the standard as follows:
redundant coded picture: A coded representation of a picture or a part of a picture. The content of a redundant coded picture shall not be used by the decoding process for a bitstream conforming to this Recommendation I International Standard. A redundant coded picture is not required to contain all macroblocks in the primary coded picture. Redundant coded pictures have no normative effect on the decoding process. See also primary coded picture.

The slice header contains a redundant_pic_cnt field, whose semantics are defined as follows:
redundant_pic_cnt shall be equal to 0 for slices and slice data partitions belonging to the primary coded picture. The redundant_pic_cnt shall be greater than 0 for coded slices and coded slice data partitions in redundant coded pictures. When redundant_pic_cnt is not present, its value shall be inferred to be equal to 0. The value of redundant_pic_cnt shall be in the range of 0 to 127, inclusive.
   - If the syntax elements of a slice data partition A RBSP indicate the presence of any syntax elements of category 3 in the slice data for a slice, a slice data partition B RBSP shall be present having the same value of slice_id and redundant_pic_cnt as in the slice data partition A RBSP.
   - Otherwise (the syntax elements of a slice data partition A RBSP do not indicate the presence of any syntax elements of category 3 in the slice data for a slice), no slice data partition B RBSP shall be present having the same value of slice_id and redundant_pic_cnt as in the slice data partition A RBSP.

In the prior art, a system is utilized wherein a channel change stream is encoded and transmitted along with the normal video bitstream. The channel change stream includes lower quality I pictures that are sent at a higher frequency than I pictures in the normal bitstream. When a user tunes to a new channel, playback may begin upon receipt of the first I pictures, in either the normal or channel change stream.

Also in the prior art, a reduced resolution update CODEC is utilized wherein prediction residuals can be coded at lower resolutions for some of the coded pictures in a sequence, while other coded pictures in a sequence are coded at the full resolution.

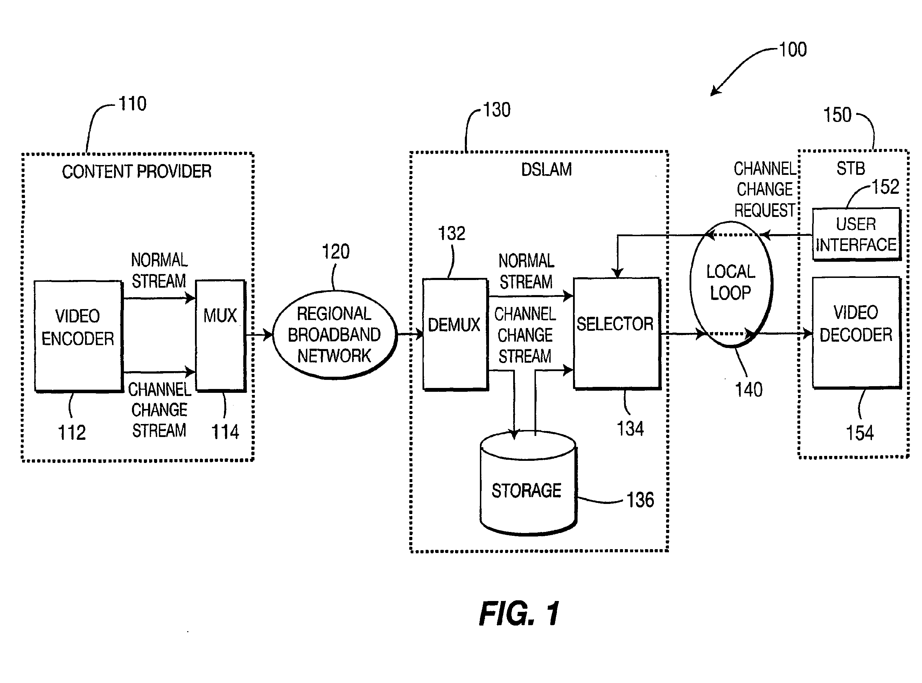

Moreover, in the prior art, another system (hereinafter referred to as the "conventional system", which is shown in FIG. 1), is utilized wherein a channel change stream is encoded and transmitted along with a normal bitstream over the regional broadband network. These streams may be stored at the DSLAM. When user channel change requests are received at the DSLAM, the channel change stream is sent over the DSL local loop for a short transition period, and then the normal stream is sent. If a channel change stream coded picture is larger than its corresponding normal stream coded picture, the instantaneous bandwidth requirements of the DSL local loop would be increased. This may cause problems with encoder rate control and buffer overflow/underflow at the decoder and the DSLAM. This problem can be avoided by limiting the size of the channel change stream coded pictures, which leads to lower quality video during a transitional period following a channel change.

In the conventional system, the DSLAM is required to play an active role in channel change, by processing channel change requests from the set-top box and sending data first from the channel change stream and then from the normal stream. Optional storage at the DSLAM could reduce channel change acquisition time.

Turning to FIG. 1, an exemplary end-to-end Digital Subscriber Line (DSL) system architecture of the conventional system described immediately herein before is indicated generally by the reference numeral 100. The architecture 100 includes a content provider 110, a regional broadband network 120, a digital subscriber line access multiplexer (DSLAM) 130, a local loop 140, and a set top box (STB) 150. The content provider 110 includes a video encoder 112 having a first and a second output in signal communication with a first and second input, respectively, of a multiplexer 114. An output of the multiplexer 114 provides an output of the content provider 110, which is connected in signal communication with the regional broadband network 120. The regional broadband network 120 is further connected in signal communication with a first input of the DSLAM 130.

The DSLAM 130 includes a demultiplexer 132 having a first output in signal communication with a first input of a selector 134 and a second output in signal communication with an input of a local storage device 136. An output of the storage device 136 is connected in signal communication with a second input of the selector 134. The first input of the DSLAM 130 is connected in signal communication with an input of the demultiplexer 132, a second input of the DSLAM 130 is connected in signal communication with a third input of the selector 134, and an output of the DSLAM 130 is connected in signal communication with an output of the selector 134. The second input and the output of the DSLAM 130 are connected in signal communication with the local loop 140.

The STB 150 includes a user interface 152 and a video decoder 154. An output of the STB 150 is connected in signal communication with the local loop 140 and with the user interface 152, and an input of the STB 150 is connected in signal communication with the local loop 140 and with the video decoder 154.

Accordingly, it would be desirable and highly advantageous to have a method and apparatus for changing a channel in a Digital Subscriber Line (DSL) system that overcome the above-described deficiencies of the prior art.

### SUMMARY OF THE INVENTION

These and other drawbacks and disadvantages of the prior art are addressed by the present invention, which is directed to a method and apparatus for changing a channel in a Digital Subscriber Line (DSL) system.

According to an aspect of the present invention, there is provided a set top box for enabling a channel change in a Digital Subscriber Line (DSL) system. The set top box includes a channel change processing unit for sending a join request for both a normal stream and channel change stream upon receiving a channel change request.

According to another aspect of the present invention, there is provided a set top box (STB) for supporting a picture-in-picture (PIP) mode on a display device connected thereto. The STB is further coupled to a Digital Subscriber Line (DSL) system. The set top box includes a standard resolution decoder for decoding a normal stream picture of a normal stream for display on the display device in the PIP mode, and a low resolution decoder for decoding a low resolution picture of a parallel coded stream for display on the display device in the PIP mode.

According to yet another aspect of the present invention, there is provided, in a set top box coupled to a Digital Subscriber Line (DSL) system and having a user interface for issuing a channel change request, a method for enabling a channel change. The method includes the step of sending a join request for both a normal stream and channel change stream upon receiving a channel change request.

According to still another aspect of the present invention, there is provided, in a set top box (STB) connected to a Digital Subscriber Line (DSL) system and a display device, a method for supporting a picture-in-picture (PIP) mode on the display device. The method includes the step of decoding, using a standard resolution decoder, a normal stream picture of a normal stream for display on the display device in the PIP mode. The method further includes the step of decoding, using a low resolution decoder, a low resolution picture of a parallel coded stream for display on the display device in the PIP mode.

These and other aspects, features and advantages of the present invention will become apparent from the following detailed description of exemplary embodiments, which is to be read in connection with the accompanying drawings.

### BRIEF DESCRIPTION OF THE DRAWINGS

The present invention may be better understood in accordance with the following exemplary figures, in which:
FIG. 1 shows a diagram of an exemplary end-to-end Digital Subscriber Line (DSL) system architecture in accordance with the prior art;
FIG. 2 shows a diagram of an exemplary end-to-end Digital Subscriber Line (DSL) system architecture in accordance with the present invention;
FIG. 3 shows a method for enabling a channel change in a Digital Subscriber Line (DSL) system in accordance with the principles of the present invention;
FIG. 4 shows a set top box (STB) that includes both a normal video decoder and a low resolution video decoder in accordance with the principles of the present invention; and
FIG. 5 shows a sample picture coding in accordance with the principles of the present invention.

### DETAILED DESCRIPTION

The present invention is directed to a method and apparatus for changing a channel in a Digital Subscriber Line (DSL) system. In an embodiment of the present invention, the present invention advantageously allows for limiting the channel change delay (change time) in a video over DSL multicast system while improving coding efficiency, with minimal impact on a Digital Subscriber Line Access Multiplexer (DSLAM) that supports Internet Protocol (IP) multicast.

In accordance with the principles of the present invention, for each program, a relatively low bitrate, low resolution channel change stream is encoded, in addition to the normal coded stream. When a channel change request is received at the set-top box (STB), join requests are made to both the channel change stream and the normal stream of the newly selected program. The channel change stream may also be used for picture-in-picture (PIP) support at the STB, as described further herein below.

The present description illustrates the principles of the present invention. It will thus be appreciated that those skilled in the art will be able to devise various arrangements that, although not explicitly described or shown herein, embody the principles of the invention and are included within its spirit and scope.

All examples and conditional language recited herein are intended for pedagogical purposes to aid the reader in understanding the principles of the invention and the concepts contributed by the inventor to furthering the art, and are to be construed as being without limitation to such specifically recited examples and conditions.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. It is thus regarded that any means that can provide those functionalities are equivalent to those shown herein.

In accordance with the principles of the present invention, a desired channel change delay can be achieved without requiring I pictures to be sent as frequently as is done in prior art systems. Instead, a channel change stream is encoded that includes lower quality coded pictures, in addition to the normal quality coded pictures in the normal stream. Each picture in the channel change stream is associated with a normal stream picture, but not all pictures present in the normal stream need to have an associated picture in the channel change stream. Coded pictures in the channel change stream may be coded at a lower resolution than pictures in the normal stream. I pictures occur more frequently in the channel change stream, to enable more frequent random access.

In the conventional system described above with respect to FIG. 1, the DSLAM is required to play an active role in channel change, by processing channel change requests from the set-top box, and sending data first from the channel change stream and then from the normal stream. Optional storage at the DSLAM could reduce channel change acquisition time. In accordance with the principles of the present invention, however, less capability is required in the DSLAM, and more capability in the STB.

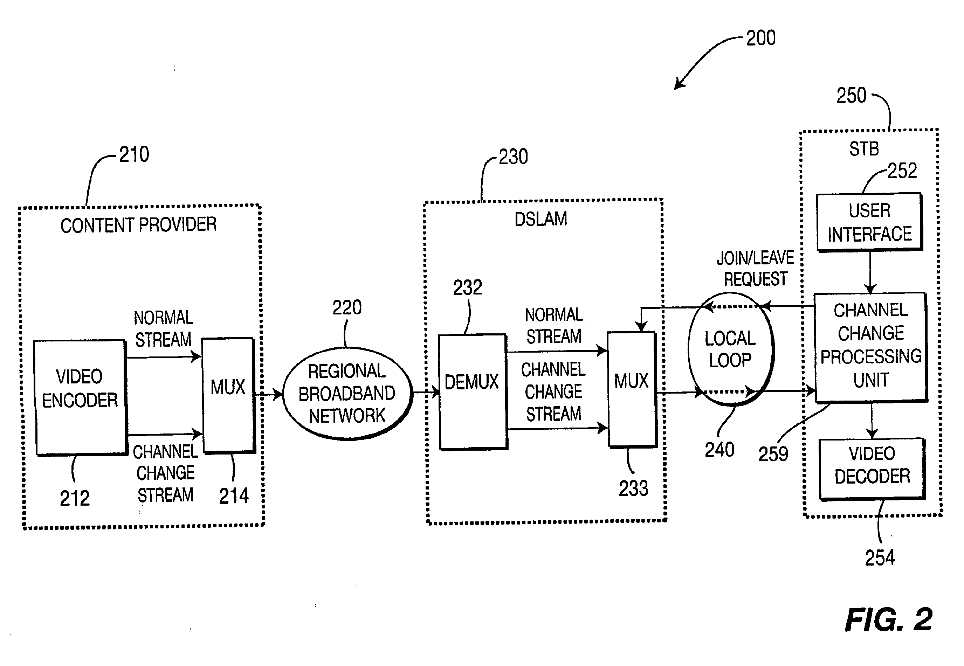

Turning to FIG. 2, an exemplary end-to-end Digital Subscriber Line (DSL) system architecture is indicated generally by the reference numeral 200. The architecture 200 includes a content provider 210, a regional broadband network 220, a digital subscriber line access multiplexer (DSLAM) 230, a local loop 240, and a set top box (STB) 250. The content provider 210 includes a video encoder 212 having a first and a second output in signal communication with a first and second input, respectively, of a multiplexer 214. An output of the multiplexer 214 provides an output of the content provider 210, which is connected in signal communication with the regional broadband network 220. The regional broadband network 220 is further connected in signal communication with a first input of the DSLAM 230.

The DSLAM 230 includes a demultiplexer 232 and a multiplexer 233. An input of the demultiplexer 232 is available as the first input of the DLSAM 230. A first output of the demultiplexer 232 is connected in signal communication with a first input of a multiplexer 233, and a second output of the demultiplexer 232 is connected in signal communication with a second input of the multiplexer 233. A third input of the multiplexer 233 is available as a second input of the DSLAM 230. An output of the multiplexer 233 is available as output of the DSLAM 230. The third input of the DSLAM 230 and the output of the DSLAM 230 are connected in signal communication with the local loop 240.

The STB 250 includes a user interface 252, a video decoder 254, and a channel change processing unit 259. A first output of the channel change processing unit 259 is available as an output of the STB 250. The output of the STB 250 is connected in signal communication with the local loop 240. A first input of the channel change processing unit 259 is available as an input of the STB 250. The input of the STB 250 is connected in signal communication with the local loop 240. An output of the user interface is connected in signal communication with a second input of the channel change processing unit 259. An input of the video decoder 254 is connected in signal communication with a second output of the channel change processing unit 259.

In contrast to the end-to-end architecture 100 of the conventional system of FIG. 1, the end-to-end architecture 200 incorporates the channel changing processing unit 259 at the STB 250. Furthermore, at the DSLAM 230, the present invention utilizes the multiplexer 233, and eliminates the DSLAM selector 134 of the DSLAM 130 of FIG. 1.

In accordance with the principles of the present invention, the normal stream and the channel change stream are multicast on separate flows from the video encoder 212 to the DSLAM 230 over the regional broadband network 220. An association is made between the normal steam and the channel change stream, similar to the association between video and audio streams of the same program. When a user indicates a channel change through the user interface 252 of the STB 250, the channel change processing unit 259 sends to the DSLAM 230 both a join request for the channel change stream and a join request for the normal stream. The Internet Group Management protocol (IGMP) may be used to send the join requests. The DSLAM 230 processes these join requests normally, and multiplexes and sends the coded data for the normal stream and the channel change stream to the STB 250. From the point of view of the DSLAM 230, the channel change stream join request is no different than a join request for any program. This differs from the prior art approach described above with respect to the conventional system of FIG. 1, which requires that the STB 150 receive a channel change request and process it differently than the STB 150 would process a normal join request.

In the conventional system described above witch respect to FIG. 1, the DSLAM 130 could determine the relative locations of I pictures in the normal stream and channel change stream. However, in the conventional system, the STB 150 does not have access to that information. In accordance with the principles of the present invention, by joining both streams, the STB 250 can be assured of receiving an I frame at the earliest possible time for the two streams. Since the channel change stream is relatively low in bitrate as compared to the normal stream, the increase in bandwidth required over the DSL local loop 240 for transmitting both streams is small, i.e., the channel change bitstream may be, e.g., 15% of the size of the normal stream. Of course, other percentages for this bandwidth increase may also be employed/controlled in accordance with the principles of the present invention. This increase in bandwidth requirements over the DSL local loop 240 occurs only for a short period of time after a channel change, and then reverts to the normal bandwidth requirement.

As the coded video packets arrive at the STB 250 for both the normal stream and the channel change stream, the STB 250 monitors the arriving packets to find when an I frame has arrived. Once an I frame is received from the normal stream, the STB 250 sends a leave request for the channel change stream, and sends the normal stream data to the decoder 254. If an I frame is received in the channel change stream before an I frame is received in the normal stream, the channel change stream data is sent to the decoder 254, until an I frame is received in the normal stream.

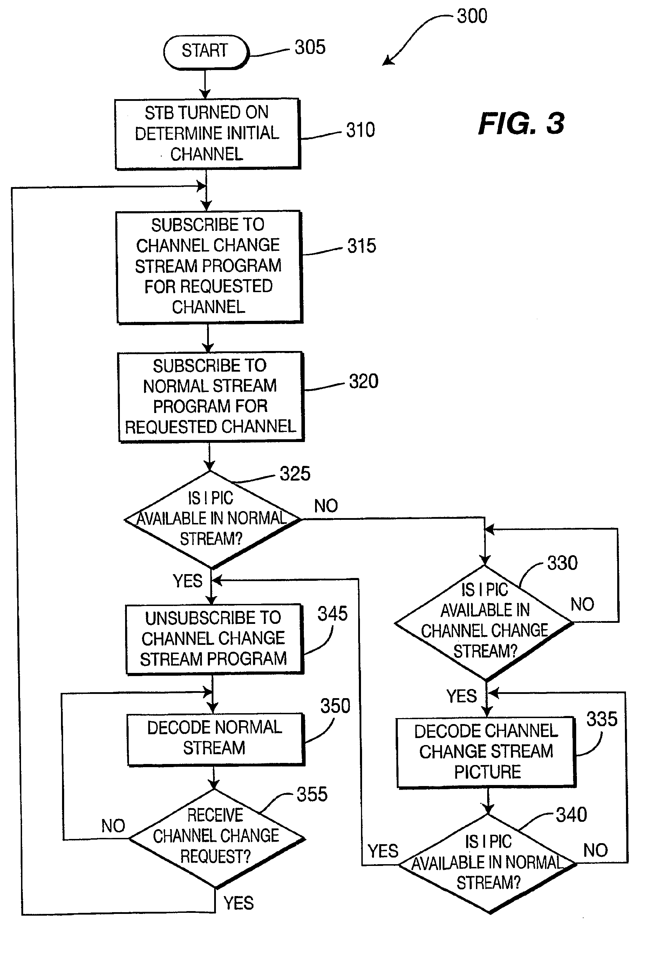

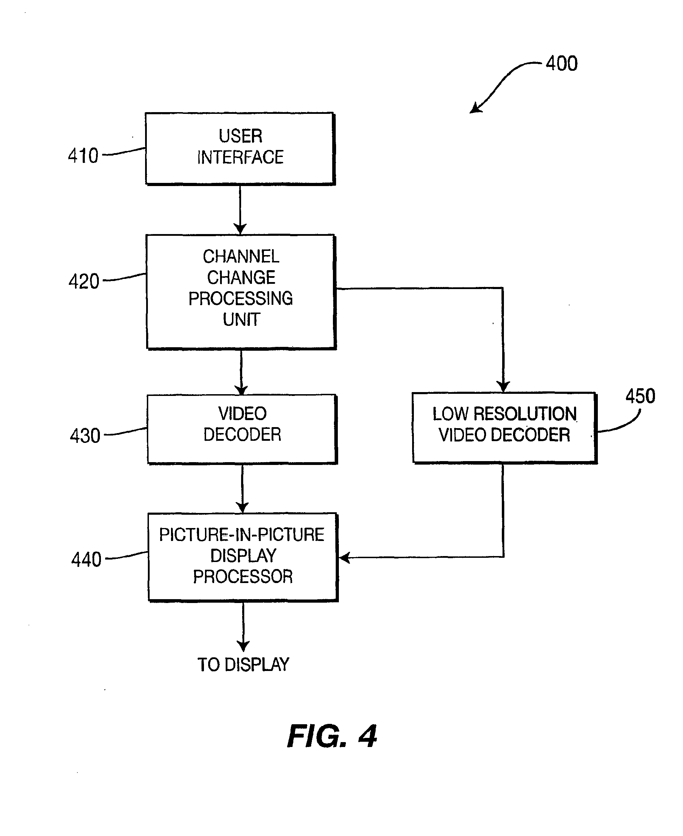

Turning to FIG. 3, a method for enabling a channel change in a Digital Subscriber Line (DSL) system is indicated generally by the reference numeral 300. It is to be appreciated that the method steps described with respect to FIG. 3 are performed by an STB (e.g., STB 250 of FIG. 2 and STB 400 of FIG. 4). A start block 305 passes control to a function block 310. The function block 310 performs the steps necessary to power up the STB (in response to receiving a user input to power up the STB), determines the initial channel, and passes control to a function block 315. The function block 315 subscribes to a channel change stream program for a requested channel, and passes control to a function block 320. The function block 320 subscribes to a normal stream program for the requested channel, and passes control to a decision block 325. The decision block 325 determines whether or not an I picture is available in the normal stream. If an I picture is not available in the normal stream, then control is passed to a decision block 330. Otherwise, if an I picture is available in the normal stream, then control is passed to a function block 345.

The decision block 330 determines whether or not an I picture is available in the channel change stream. If an I picture is not available in the channel change stream, then control is returned to decision block 330. Otherwise, if an I picture is available in the channel change stream, then control is passed to a function block 335.

The function block 335 decodes the channel change stream picture, and passes control to a decision block 340. The decision block 340 determines whether or not an I picture is available in the normal stream. If an I picture is not available in the normal stream, then control is returned to function block 335. Otherwise, if an I picture is available in the normal stream, then control is passed to a function block 345.

The function block 345 unsubscribes to the channel change stream program, and passes control to a function block 350. The function block 350 decodes the normal stream, and passes control to a decision block 355. The decision block 355 determines whether or not a channel change request has been received. It a channel change request has not been received, then control is returned to function block 350. Otherwise, if a channel change request has been received, then control is returned to function block 315.

It is to be appreciated that the channel change stream may be coded at a lower resolution and lower bitrate than the normal stream. Moreover, the channel change stream may also be coded at a lower frame rate. Further, the channel change stream may contain only I pictures, or may also include P and/or B pictures.

The channel change stream may also be used to enable picture-in-picture (PIP) operation at the STB. Since the channel change stream is of lower resolution than the normal stream, the decoder complexity required to decode it is of lower complexity. This may enable PIP operation at the set top box without requiring two full video decoders, instead requiring one normal video decoder and an additional low resolution decoder.

Turning to FIG. 4, a set top box (STB) that includes both a normal video decoder and a low resolution video decoder is indicated generally by the reference numeral 400. The STB 400 could join the normal stream for the main channel, and the channel change stream for the PIP channel.

The STB 400 includes a user interface 410, a channel change processing unit 420, a video decoder 430, a picture-in-picture (PIP) display processor 440, and a low resolution video decoder 450.

An output of the user interface 410 is connected in signal communication with an input of the channel change processing unit 420. A first output of the channel change processing unit 420 is connected in signal communication with an input of the low resolution video decoder 450. An output of the low resolution video decoder 450 is connected in signal communication with a first input of the PIP display processor 440. An output of the PIP display processor 440 is connected in signal communication with a display (not shown). A second output of the channel change processing unit 420 is connected in signal communication with an input of the video decoder 430. An output of the video decoder is connected in signal communication with a second input of the PIP display processor 440.

In a system with the PIP feature, the video encoder 212 should include I pictures in channel change stream at regular intervals, even if an I picture is present in the normal stream at the same place, so that PIP playback is smooth.

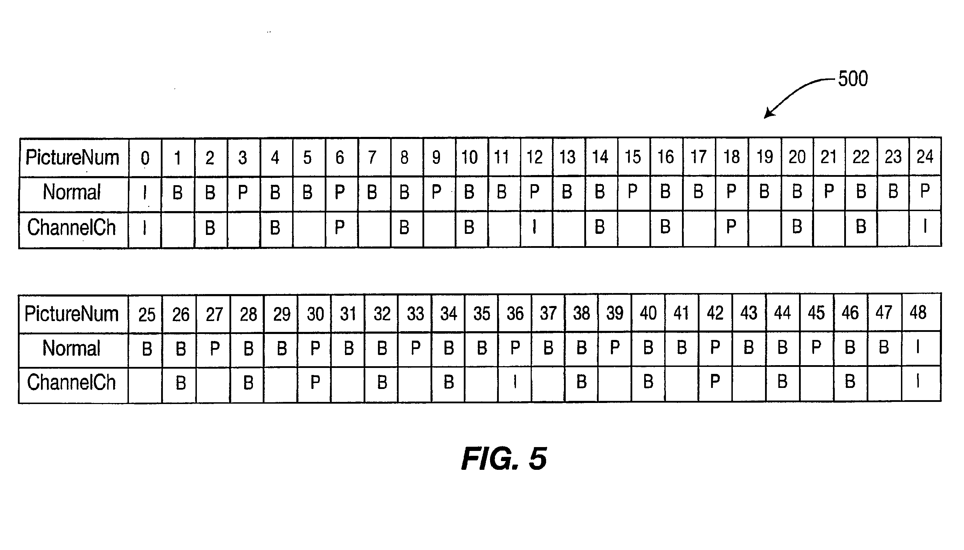

Turning to FIG. 5, a sample picture coding is indicated generally by the reference numeral 500. The sample picture coding 500 is for a 24 fps normal sequence where channel change start periods of ½ second are desired and the channel change stream is 12 fps. In this example, I pictures are inserted in the channel change stream every 12 pictures. I pictures are inserted in the normal stream every 48 pictures, or every 2 seconds. Of course, given the teachings of the present invention provided herein, other picture coding may also be employed in accordance with the principles of the present invention, while maintaining the scope of the present invention.

A description will now be given of some of the many attendant advantages/features of the present invention. For example, one advantage/feature is a set top box (STB) having a channel change processing unit for sending a join request for both a normal stream and channel change stream upon receiving a channel change request. Another advantage/feature is an STB as described above, wherein a leave request is sent by the STB for the channel change stream upon receiving an I picture in the normal stream. Still another advantage/feature is an STB as described above, wherein after a channel change request the channel change stream pictures are decoded and displayed for a period of time, and then the normal stream picture are decoded and displayed. Further, another advantage/feature is an STB as described above, wherein the channel change stream coded pictures are of lower resolution than the normal stream coded pictures. Moreover, another advantage/feature is an STB as described above, wherein the channel change stream coded pictures are of lower frame rate than the normal stream coded pictures. Also, another advantage/feature is an STB as described above, wherein the channel change stream coded pictures are coded at a lower bitrate than the normal stream pictures. Additionally, another advantage/feature is an STB that supports picture-in-picture (PIP) using a normal decoder to decode a normal stream and a low resolution decoder to decode a parallel coded stream.

These and other features and advantages of the present invention may be readily ascertained by one of ordinary skill in the pertinent art based on the teachings herein. It is to be understood that the teachings of the present invention may be implemented in various forms of hardware, software, firmware, special purpose processors, or combinations thereof.

Most preferably, the teachings of the present invention are implemented as a combination of hardware and software. Moreover, the software is preferably implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present invention is programmed. Given the teachings herein, one of ordinary skill in the pertinent art will be able to contemplate these and similar implementations or configurations of the present invention.

Although the illustrative embodiments have been described herein with reference to the accompanying drawings, it is to be understood that the present invention is not limited to those precise embodiments, and that various changes and modifications may be effected therein by one of ordinary skill in the pertinent art without departing from the scope of the present invention. All such changes and modifications are intended to be included within the scope of the present invention as set forth in the appended claims.

## Claims

1. A set top box for enabling a channel change in a Digital Subscriber Line system, comprising a decoder (430) and a channel change processing unit (259) for sending both a join request for a normal stream and a join request for a channel change stream upon receiving a same channel change request, the normal stream and the channel change stream corresponding to a same selected program, said channel change stream being coded at a lower resolution than the normal stream and comprising more frequent intra-coded pictures, the channel change processing unit being adapted to first check if an intra-coded picture is available in the normal stream, if an intra-coded picture is available in the normal stream, decoding said normal stream by the decoder and sending a leave request for the channel change stream, and if no intra-coded picture is available in the normal stream, decoding by the decoder an intra-coded picture received in the channel change stream until an intra-coded picture is received from the normal stream, and sending a leave request for the channel change stream.

2. The set top box of claim 1, further comprising a decoder (254) for decoding channel change stream pictures in the channel change stream for display for a period of time and for decoding normal stream pictures in the normal stream for display thereafter.

3. The set top box of claim 1, wherein channel change stream coded pictures are of lower frame rate than normal stream coded pictures.

4. The set top box of claim 1, wherein channel change stream coded pictures are coded at a lower bitrate than normal stream pictures.

5. The set top box of Claim 1, wherein the set top box is connected to a display device, and the set top box further comprises:
a standard resolution decoder (430) for decoding a normal stream picture of the normal stream for display on the display device in the PIP mode; and
a low resolution decoder (450) for decoding a low resolution picture of the channel change stream for display on the display device in the PIP mode.

6. In a set top box coupled to a Digital Subscriber Line system and having a user interface for issuing a channel change request, a method for enabling a channel change, the method comprising the steps of:
sending both a join request for a normal stream and a join request for a channel change stream upon receiving a same channel change request, the normal stream and the channel change stream both corresponding to a same selected program, said channel change stream being coded at a lower resolution and lower bit rate than the normal stream and comprising more frequent intra-coded pictures,
if an intra-coded picture is available in the normal stream, decoding said normal stream and sending a leave request for the channel change stream;
if no intra-coded picture is available in the normal stream, decoding an intracoded picture received in the channel change stream until an intra-coded picture is received from the normal stream; and sending a leave request for the channel change stream.

7. The method of claim 6, further comprising the steps of:
decoding (335) channel change stream pictures in the channel change stream for display for a period of time; and
decoding (350) normal stream pictures in the normal stream for display thereafter.

8. The method of claim 6, wherein channel change stream coded pictures are of lower frame rate than normal stream coded pictures.

9. The method of claim 6, wherein channel change stream coded pictures are coded at a lower bitrate than normal stream pictures.

10. The method of claim 6, wherein the set top box is connected to a display device, and the method further comprises the steps of:
decoding (350), using a standard resolution decoder, a normal stream picture of the normal stream for display on the display device in the PIP mode; and
decoding (335), using a low resolution decoder, a low resolution picture of the channel change stream for display on the display device in the PIP mode.

## Patentansprüche

1. Set-Top-Box zum Ermöglichen eines Kanalwechsels in einem Digital-Subscriber-Line-System, das einen Decoder (430) und eine Kanalwechsel-Verarbeitungseinheit (259) zum Senden sowohl einer Beitrittsanforderung für einen normalen Datenstrom als auch einer Beitrittsanforderung für einen Kanalwechsel-Datenstrom beim Empfang einer selben Kanalwechselanforderung umfasst, wobei der normale Datenstrom und der Kanalwechsel-Datenstrom einem selben ausgewählten Programm entsprechen, wobei der Kanalwechsel-Datenstrom mit einer niedrigeren Auflösung als der normale Datenstrom codiert ist und häufigere intra-codierte Bilder umfasst, wobei die Kanalwechsel-Verarbeitungseinheit dafür ausgelegt ist zu prüfen, ob in dem normalen Datenstrom ein intra-codiertes Bild verfügbar ist, und durch den Decoder den normalen Datenstrom zu decodieren und eine Verlassensanforderung für den Kanalwechsel-Datenstrom zu senden, falls in dem normalen Datenstrom ein intra-codiertes Bild verfügbar ist, und durch den Decoder ein in dem Kanalwechsel-Datenstrom empfangenes intra-codiertes Bild zu decodieren, bis von dem normalen Datenstrom ein intra-codiertes Bild empfangen wird, und eine Verlassensanforderung für den Kanalwechsel-Datenstrom zu senden, falls in dem normalen Datenstrom kein intra-codiertes Bild verfügbar ist.

2. Set-Top-Box nach Anspruch 1, die ferner einen Decoder (254) zum Decodieren von Kanalwechsel-Datenstrombildern in dem Kanalwechsel-Datenstrom zur Anzeige für eine Zeitdauer und zum Decodieren von Bildern des normalen Datenstroms in dem normalen Datenstrom zur anschließenden Anzeige umfasst.

3. Set-Top-Box nach Anspruch 1, wobei in dem Kanalwechsel-Datenstrom codierte Bilder eine niedrigere Bildwiederholrate als in dem normalen Datenstrom codierte Bilder aufweisen.

4. Set-Top-Box nach Anspruch 1, wobei in dem Kanalwechsel-Datenstrom codierte Bilder mit einer niedrigeren Bitrate als Bilder des normalen Datenstroms codiert sind.

5. Set-Top-Box nach Anspruch 1, wobei die Set-Top-Box mit einer Anzeigevorrichtung verbunden ist und wobei die Set-Top-Box ferner umfasst:
einen Decoder (430) für Standardauflösung zum Decodieren eines Bilds des normalen Datenstroms des normalen Datenstroms zur Anzeige auf der Anzeigevorrichtung in der PIP-Betriebsart; und
einen Decoder (450) für niedrige Auflösung zum Decodieren eines niedrig aufgelösten Bilds des Kanalwechsel-Datenstroms zur Anzeige auf der Anzeigevorrichtung in der PIP-Betriebsart.

6. Verfahren zum Ermöglichen eines Kanalwechsels in einer Set-Top-Box, die mit einem Digital-Subscriber-Line-System gekoppelt ist und die eine Nutzerschnittstelle zum Ausgeben einer Kanalwechselanforderung aufweist, wobei das Verfahren die folgenden Schritte umfasst:
Senden sowohl einer Beitrittsanforderung für einen normalen Datenstrom als auch einer Beitrittsanforderung für einen Kanalwechsel-Datenstrom beim Empfang einer selben Kanalwechselanforderung, wobei der normale Datenstrom und der Kanalwechsel-Datenstrom beide einem selben ausgewählten Programm entsprechen, wobei der Kanalwechsel-Datenstrom mit einer niedrigeren Auflösung und mit einer niedrigeren Bitrate als der normale Datenstrom codiert ist und häufigere intra-codierte Bilder umfasst,
Decodieren des normalen Datenstroms und Senden einer Verlassensanforderung für den Kanalwechsel-Datenstrom, falls in dem normalen Datenstrom ein intra-codiertes Bild verfügbar ist;
Decodieren eines in dem Kanalwechsel-Datenstrom empfangenen intracodierten Bilds, bis von dem normalen Datenstrom ein intra-codiertes Bild empfangen wird; und Senden einer Verlassensanforderung für den Kanalwechsel-Datenstrom, falls in dem normalen Datenstrom kein intra-codiertes Bild verfügbar ist.

7. Verfahren nach Anspruch 6, das ferner die folgenden Schritte umfasst:
Decodieren (335) von Kanalwechsel-Datenstrombildern in dem Kanalwechsel-Datenstrom zur Anzeige für eine Zeitdauer; und
Decodieren (350) von Bildern des normalen Datenstroms in dem normalen Datenstrom zur anschließenden Anzeige.

8. Verfahren nach Anspruch 6, wobei in dem Kanalwechsel-Datenstrom codierte Bilder eine niedrigere Bildwiederholrate als in dem normalen Datenstrom codierte Bilder aufweisen.

9. Verfahren nach Anspruch 6, wobei in dem Kanalwechsel-Datenstrom codierte Bilder mit einer niedrigeren Bitrate als Bilder des normalen Datenstroms codiert sind.

10. Verfahren nach Anspruch 6, wobei die Set-Top-Box mit einer Anzeigevorrichtung verbunden ist und wobei das Verfahren ferner die folgenden Schritte umfasst:
Decodieren (350) eines Bilds des normalen Datenstroms des normalen Datenstroms zur Anzeige auf der Anzeigevorrichtung in der PIP-Betriebsart unter Verwendung eines Standardauflösungsdecoders; und
Decodieren (335) eines niedrig aufgelösten Bilds des Kanalwechsel-Datenstroms zur Anzeige auf der Anzeigevorrichtung in der PIP-Betriebsart unter Verwendung eines Decoders für niedrige Auflösung.

## Revendications

1. Un boîtier décodeur pour autoriser un changement de canal dans un système de ligne numérique d'abonné, comprenant un décodeur (430), et une unité de traitement de changement de canal (259) pour l'envoi à la fois d'une requête de connexion pour un flux normal et d'une requête de connexion pour un flux de changement de canal à réception d'une même requête de changement de canal, le flux normal et le flux de changement de canal correspondant à un même programme sélectionné, ledit flux de changement de canal étant codé avec une résolution inférieure au flux normal et comprenant des images plus fréquentes à codage intra, l'unité de traitement du changement de canal étant adaptée pour vérifier d'abord si une image à codage intra est disponible dans le flux normal, si une image à codage intra est disponible dans le flux normal, décodage dudit flux normal par le décodeur et envoi d'une requête de déconnexion pour le flux de changement de canal, et si aucune image à codage intra n'est disponible dans le flux normal, décodage par le décodeur d'une image à codage intra reçue dans le flux de changement de canal jusqu'à ce qu'une image à codage intra soit reçue en provenance du flux normal et envoi d'une requête de déconnexion pour le flux de changement de canal.

2. Le boîtier décodeur de la revendication 1, comprenant en outre un décodeur (264) pour décoder des images de flux du changement de canal dans le flux de changement de canal pour affichage pendant une période de temps et pour décoder des images de flux normal dans le flux normal pour affichage ultérieur.

3. Le boîtier décodeur de la revendication 1, dans lequel les images codées du flux de changement de canal ont un taux de trame inférieur aux images codées du flux normal.

4. Le boîtier décodeur de la revendication 1, dans lequel les images codées du flux de changement de canal sont codées avec un débit binaire inférieur aux images du flux normal.

5. Le boîtier décodeur de la revendication 1, dans lequel le boîtier décodeur est connecté à un dispositif d'affichage, et le boîtier décodeur comprend en outre :
un décodeur de résolution standard (430) pour décoder une image de flux normal du flux normal pour affichage sur le dispositif d'affichage en mode PIP ; et
un décodeur à basse résolution (450) pour décoder une image à basse résolution du flux de changement de canal pour affichage sur le dispositif d'affichage en mode PIP.

6. Dans un décodeur couplé au système de ligne numérique d'abonné et disposant d'une interface utilisateur afin d'émettre une requête de changement de canal, un procédé pour autoriser un changement de canal, le procédé comprenant les étapes suivantes :
envoi à la fois d'une requête de connexion pour un flux normal et d'une requête de connexion pour un flux de changement de canal à réception d'une même requête de changement de canal, le flux normal et le flux de changement de canal correspondant tous les deux à un même programme sélectionné, ledit flux de changement de canal étant codé avec une résolution inférieure et un taux binaire inférieur au flux normal et comprenant des images à codage intra plus fréquentes,
si une image à codage intra est disponible dans le flux normal, décodage dudit flux normal et envoi d'une requête de déconnexion pour le flux de changement de canal ;
si aucune image à codage intra n'est disponible dans le flux normal, décodage d'une image à codage intra reçue dans le flux de changement de canal jusqu'à ce qu'une image à codage intra soit reçue en provenance du flux normal ; et envoi d'une requête de déconnexion pour le flux de changement de canal.

7. Le procédé selon la revendication 6, comprenant en outre les étapes suivantes :
décodage (335) d'images de flux de changement de canal dans le flux de changement de canal pour affichage pendant une période de temps ;et
décodage (350) d'images de flux normal dans le flux normal pour affichage ultérieur.

8. Le procédé de la revendication 6, dans lequel les images codées du flux de changement du canal ont un taux de trame inférieur aux images codées du flux normal.

9. Le procédé de la revendication 6, dans lequel les images codées du flux de changement du canal sont codées avec un débit binaire inférieur aux images du flux normal.

10. Le procédé de la revendication 6, dans lequel le boîtier décodeur est connecté à un dispositif d'affichage, et le procédé comprend en outre les étapes suivantes :
décodage (350), à l'aide d'un décodeur de résolution standard, d'une image de flux normal du flux normal pour affichage sur le dispositif d'affichage en mode PIP ; et décodage (335), à l'aide d'un décodeur à basse résolution, d'une image à basse résolution du flux de changement de canal pour affichage sur le dispositif d'affichage en mode PIP.
